# EUROPEAN PATENT SPECIFICATION

(11) **EP 2 109 061 B1**
(45) Date of publication and mention of the grant of the patent: **27.02.2013**
(21) Application number: 09009938.3
(22) Date of filing: 18.05.2006
(51) Int. Cl.: G06K 9/20

(54) **Image processing apparatus for vehicle**
Bildverarbeitungsvorrichtung für ein Fahrzeug
Appareil de traitement d'images pour véhicule

(30) Priority: 20.05.2005 JP 2005148097; 11.05.2006 JP 2006132205
(43) Date of publication of application: 14.10.2009
(62) Divisional of application: 06746632.6
(73) Proprietor: TOYOTA JIDOSHA KABUSHIKI KAISHA, Toyota-shi, Aichi-ken, 471-8571 (JP)
(72) Inventor: Usami, Masayuki, Toyota-shi Aichi 471-8571 (JP); Tamaoki, Tomoyasu, Toyota-shi Aichi 470-0334 (JP)
(74) Representative: Winter, Brandl, Fürniss, Hübner, Röss, Kaiser, Polte - Partnerschaft

(56) References cited:
- GRAEFE V: "ECHTZEIT-BILDVERARBEITUNG FUR EIN FAHRER-UNTERSTUETZUNGSSYSTEM ZUM EINSATZ AUF AUTOBAHNEN" IT + TI INFORMATIONSTECHNIK UND TECHNISCHE INFORMATIK, OLDENBOURG VERLAG. MUNCHEN, DE, vol. 36, no. 1, 1 February 1994 (1994-02-01), pages 16-24, XP000435494 ISSN: 0944-2774
- BERTOZZI M ET AL: "GOLD: A PARALLEL REAL-TIME STEREO VISION SYSTEM FOR GENERIC OBSTACLE AND LANE DETECTION" IEEE TRANSACTIONS ON IMAGE PROCESSING, IEEE SERVICE CENTER, PISCATAWAY, NJ, US, vol. 7, no. 1, 1 January 1998 (1998-01-01), pages 62-80, XP000727376 ISSN: 1057-7149
- COZAR J R ET AL: "Planar object detection under scaled orthographic projection" PATTERN RECOGNITION LETTERS, ELSEVIER, AMSTERDAM, NL, vol. 23, no. 6, 1 April 2002 (2002-04-01), pages 719-729, XP004341037 ISSN: 0167-8655
- KNOLL ET AL: "A NIR Based System for Night Vision Improvement" "CONVERGENCE 2002: TRANSPORTATION ELECTRONICS = BUSINESS TECHNOLOGY PROCESS, 23 October 2001 (2001-10-23), XP002561920 Detroit

## Description

### TECHNICAL FIELD

The present invention relates to an image processing apparatus for vehicle, that detects white lines and three-dimensional objects on a road surface based on a captured image.

### BACKGROUND ART

Conventionally, there is a known control apparatus (for example, refer to Patent Document 1) for controlling a shutter speed of a camera using a luminance histogram which is created based on a luminance distribution of an image that is captured by the camera. The control apparatus described in the Patent Document 1 adds the values of the luminance distribution histogram from the low luminance side to obtain one accumulated value and from the high luminance side to obtain another accumulated value until respective set values are exceeded, and adjusts the shutter speed so that an interval on the low luminance side when the one accumulated value exceeds the corresponding set value and an interval on the high luminance side when the other accumulated value exceeds the corresponding set value become the same.

In vehicles, the camera having its shutter speed controlled in this manner captures a periphery of the vehicle and supports a driver based on the captured image. There is a known image processing apparatus for vehicle (for example, refer to Patent Document 2) which supports the vehicle operation by detecting the traffic lane, obstacles and the like from the captured image of the periphery of the vehicle, for example. The image processing apparatus for vehicle described in the Patent Document 2 detects the white line from the image obtained by one of a pair of stereo cameras, and detects the three-dimensional object from a correlation that is obtained by comparing images obtained by the two cameras in units of rectangular regions.
Patent Document 1: Japanese Laid-Open Patent Application No.11-258654
Patent Document 2: Japanese Laid-Open Patent Application No.11-14346

Graefe, V.: "Echtzeit-Bildverarbeitung für ein Fahrer-Unterstützungssystem zum Einsatz auf Autobahnen", IT + TI Informationstechnik und Technische Informatik, Oldenbourg Verlag, München, vol. 36, no.1, 1 February 1994, pages 16 - 24, discloses a real time image processing method for a driver support system to be used on freeways. There are implemented a plurality of visual object recognition modules by object oriented programming. The system is able to detect or recognize road lines as well as different types of three-dimensional objects such as road signs. The system uses three cameras, i.e. a first camera for the front direction having a wide angle lens, a camera for the front direction having a telephoto lens, and a camera for rear direction. Moreover, it is mentioned to use a commonly used camera which is modified such that the integration time of its sensor elements can be digitally controlled. By this, the exposure conditions of the camera can be controlled such that at least image regions containing essential information are properly exposed, whereas upper image regions, which at that point of time are irrelevant, are allowed to be underexposed or overexposed.

Knoll et al: "A NIR Based System for Night Vision Improvement" in "Convergence 2002: Transportation Electronics = Business Technology Process, 23 October 2001" describe a NIR based night vision system for driver assistance under development as compared to a known FIR based night vision system.

### DISCLOSURE OF THE INVENTION

### PROBLEMS TO BE SOLVED BY THE INVENTION

However, a suitable shutter speed differs between the case where the white line on the road surface is detected and the case where the three-dimensional object on the road surface is detected. For this reason, if the shutter speed is controlled based on the luminance distribution of the entire image that is captured without distinguishing the white line detection from the three-dimensional object detection as described in the Patent Document 1, it is not possible to capture an image that is suited for the detection of both the white line and the three-dimensional object. In addition, even if the pair of stereo cameras is simply used in common for both the white line detection and the three-dimensional object detection as described in the Patent Document 2, it is difficult to accurately detect the white line and the three-dimensional object.

Accordingly, one object of the present invention is to provide an image processing apparatus for vehicle, which can obtain images suited for both the three-dimensional object detection and the white line detection by using cameras in common for the two detections.

### MEANS OF SOLVING THE PROBLEMS

The object is solved by the features of independent claim 1. The dependent claims are directed to preferred embodiments of the invention.

### EFFECTS OF THE INVENTION

According to the present invention, it is possible to provide an image processing apparatus for vehicle, which can obtain images suited for both the three-dimensional object detection and the white line detection by using cameras in common for the two detections.

### BRIEF DESCRIPTION OF DRAWINGS

FIG. 1 is a diagram showing a system structure using an image processing apparatus for vehicle according to an example useful for understanding the invention;
FIG. 7 is a diagram showing a state where a brightness reference window is set on a road surface;
FIG. 8 is a diagram showing a state where a brightness reference window is set in a periphery of a three-dimensional object;
FIG. 9 is a diagram showing an example of a system structure of the image processing apparatus for the vehicle according to an embodiment of the present invention;
FIG. 10 is a diagram showing a portion of an image processing sequence carried out between an image acquiring part and a stereo ECU;
FIG. 11 is a flow chart showing a control procedure in which right and left cameras are controlled by the image processing sequence; and
FIG. 12 is a flow chart showing an image processing procedure of the stereo ECU that detects the white line or the three-dimensional object according to a frame number.

### DESCRIPTION OF THE REFERENCE NUMERALS

- 10: Camera ECU
- 11, 12: Image Pickup Element
- 13: Camera CPU
- 14: Image Output Part
- 15, 16: Lens
- 17: Camera Module
- 18, 25, 26: Memory
- 20: Stereo ECU
- 21: Image Input Part
- 22: Image Conversion Process Part
- 23: SV-CPU
- 24: Image Recognition Process Part

### BEST MODE FOR CARRYING OUT THE INVENTION

A description will now be given of the best mode for carrying out the present invention in conjunction with the drawings by referring to a preferred embodiment.

### Example useful for understanding the invention:

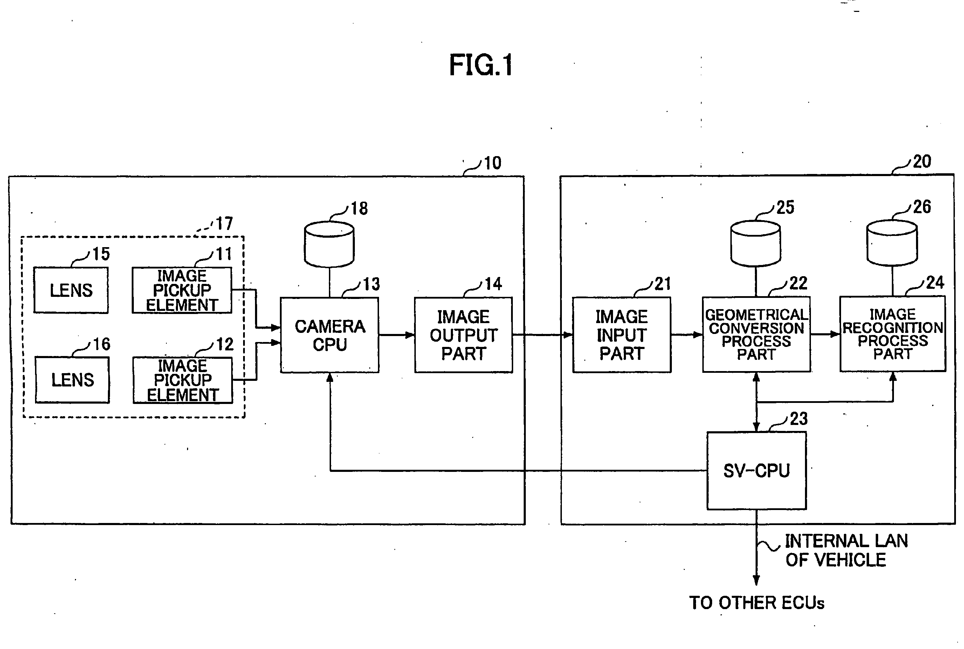

FIG. 1 is a diagram showing an example of a system structure using an image processing apparatus for vehicle. The image processing system has a camera Electric Control Unit (ECU) 10 and a stereo ECU 20. Each of the ECUs integrally has a plurality of circuit elements such as a Central Processing Unit (CPU), a ROM for storing programs, a RAM for temporarily storing data, an input interface and an output interface, as a single unit. The ECU is also referred to as a computer.

The camera ECU 10 has as an image pickup means, a camera module 17, a camera CPU 13, an image output part 14 and the like. The camera module 17 is formed by a stereo camera that is made up of image pickup elements 11 and 12, and lenses 15 and 16. For example, the image pickup elements 11 and 12 are formed by a photoelectric conversion element such as a Charged Coupled Device (CCD) and a Complementary Metal Oxide Semiconductor (CMOS). Light that is input to each of the camera module 17 from a front of the vehicle is subjected to a photoelectric conversion in the image pickup elements 11 and 12, and the accumulated charge is read as a voltage and amplified before being subjected to an analog-to-digital (A/D) conversion, and further converted into a digital image having a predetermined number of luminance gradation levels (for example, 256 gradation levels).

The camera CPU 13 carries out a camera control for adjusting a frame exposure on the camera side, based on camera control values which are obtained from the stereo ECU 20 and will be described later. The camera CPU 13 transmits, as an image signal, the frame captured by the camera module 17, the camera control values applied when capturing the image, a frame counter value and the like, to the stereo ECU 20 via the image output part 14 which forms an output interface. The number of image pickup elements is not limited to two, and mode than two image pickup elements may be provided.

The stereo ECU 20 has an image input part 21 which forms an input interface, a geometrical conversion process part 22 having a geometrical conversion LSI or the like, an image recognition process part 24 having an image processing LSI or the like, and an SV-CPU 23 which supervises each of the processing parts 22 and 24.

The image signal that is output from the image output part 14 of the camera ECU 10 is transmitted to the image input part 21 which forms the input interface of the stereo ECU 20. The image output part 14 and the image input part 21 are formed by interfaces in conformance with a predetermined digital transmission system.

The image input part 21 which receives the image signal transmits image data of the image signal to the geometrical conversion process part 22. The geometrical conversion process part 22 removes the effects of internal error factors (lens distortion, error in optical axis, error in focal distance, distortion in image pickup element, etc.) of hardware such as the image pickup elements 11 and 12, the lenses 15 and 16 and the like, from the frame that is captured by the camera module 17 and is used for a stereo operation process, so as to carry out a known process of matching an epipolar line to an image horizontal line. The geometrical conversion process part 22 converts the input image based on a Look Up Table (LUT) for geometrical conversion stored in a memory 25.

The image recognition process part 24 carries out a three-dimensional object detection process, a white line detection process and a shutter control based on the image data.which has been subjected to the geometrical conversion and is obtained from the geometrical conversion process part 22. Image processing programs for carrying out these processes and control and the image data to be processed are recorded in a memory 26, and the image recognition process part 24 carries out the processes and control by reading the recorded programs and data.

The three-dimensional object detection process that is executed by the image recognition process part 24 is a process of the image processing program which detects the three-dimensional object from the frame which is captured by the stereo vision technique, for example. For example, the three-dimensional object detection process obtains a correlation of a pair of images picked up by the image pickup elements 12 and 11 that are arranged on the right and left, and computes a distance to the object by triangulation based on parallax with respect to the same object.

In other words, the image recognition process part 24 extracts portions having the same capturing target object from a pair of stereo images picked up by the image pickup elements 11 and 12, obtains a correspondence between the same point on the capturing target object between the pair of stereo images, and obtains an amount of error (parallax) between the points (corresponding points) for which the correspondence is obtained so as to compute the distance to the capturing target object. In a case where the capturing target object is located in front, the captured target objects deviate to the right and left in the horizontal direction when the image picked up by the image pickup element 12 and the image picked up by the image pickup element 11 are overlapped. One of the two picked up images is shifted one pixel at a time until the two overlapped images matches the most, and the number of pixels shifted in this state is denoted by n. If the focal distance of the lens is denoted by f, the distance between the optical axis is denoted by m and the pixel pitch is denoted by d, a distance L to the capturing target object can be described by "L = (f·m)/(n·d)", where (n·d) indicates the parallax.

On the other hand, the white line detection process that is executed by the image recognition process part 24 is a process of the image processing program which detects the white line on the road surface from the frame which is captured. First, the white line detection process selects pixels (white line candidate points) that are regarded as corresponding to the white line on the road surface from the frame which is captured and binarized according to the luminance. Then, the white line detection process judges that the selected white line candidate points are the white line on the road surface if the white line candidate points are arranged linearly.

The white line detection process may also be carried out as follows. That is, based on the luminance of the frame that is captured, for example, regions having a luminance equal to or higher than a predetermined threshold value are searched from a bottom portion of the frame towards an upper portion of the frame. Since the white line has on both sides thereof an edge having a high-frequency component, a peak is obtained at both sides of the white line when the frame in front of the vehicle is differentiated in the horizontal direction. The white line portion can be estimated from the peaks because the positive and negative polarities of the peaks are opposite to each other between a case when moving from outside the white line to within the white line and a case when moving from inside the white line to outside the white line. The white line portion can be emphasized by subjecting the frame to a white line emphasis filter which carries out such a process. From the frame in which the white line is emphasized, it is possible to detect the white line by a technique such as matching which detects a region having features such as high luminance and linear shape that are features of the white line.

In addition, the shutter control executed by the image recognition process part 24 carries out a process of computing and adjusting appropriate camera control values (shutter speed S and control gain K). The frame exposure changes depending on the shutter speed S, and the image can be captured even at a dark location by setting the shutter speed S slow because the passing light will be kept. The image recognition process part 24 computes the appropriate camera control values based on a predetermined function F of a target brightness D_{R} in the captured frame and an actual brightness D_{A} of the captured frame. For example, if the present value of the shutter speed S is denoted by S_{N}, the previous value of the shutter speed S is denoted by S_{N-1}, and the control gain is denoted by K, the camera control value is computed based on the predetermined function F described by "S_{N} = S_{N-1} + K·(D_{R} - D_{A})".

The SV-CPU 23 supervises each of the processing parts, and it is possible for the image recognition process part 24 to function as the SV-CPU 23. The SV-CPU 23 transmits and instructs with respect to the CPU 13 within the camera ECU 10 the camera control values which are the result of the camera control.

By providing the camera ECU 10 and the stereo ECU 20 described above on the vehicle, it is possible to utilize the system for control that uses the image recognition information of the obstacles and the like on the road surface. For example, the SV-CPU 23 may transmit the result of the image recognition process to other ECUs that require the image recognition process result via an internal LAN of the vehicle. For example, the other ECUs include an ECU that controls a collision avoiding and/or collision reducing system, an ECU for controlling a traffic lane maintaining support system or a traffic lane deviance alert system, a vehicle following ECU, a brake ECU and the like.

Next, a description will be given of the operation of the image processing apparatus for the vehicle according to this example, by referring to the drawings.

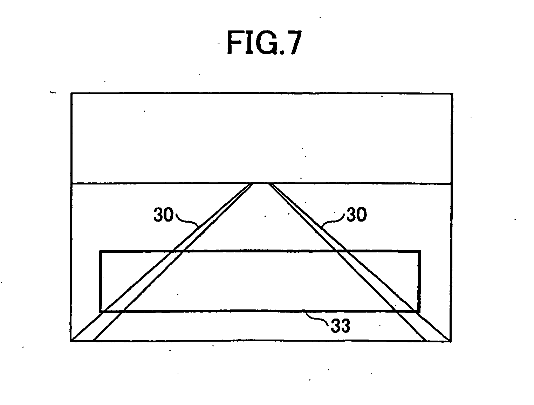

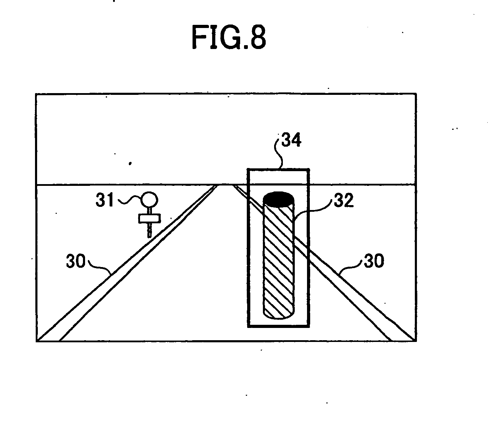

When detecting a target object by an image processing, it is desirable to control the exposure of the camera by adjusting the camera control values such as the shutter speed, so that the target object has an optimum brightness. One technique of controlling the target object sets on the captured image a window which becomes a reference for determining the camera control values. As shown in FIG. 7, in order to appropriately detect a white line 30 that is detected by the white line detection, a brightness reference window 33 is set on the road surface. On the other hand, as shown in FIG. 8, in order to appropriately detect a three-dimensional object 32, such as a leading vehicle and an obstacle, that is detected by the three-dimensional object detection process, a brightness reference window 34 is set in a periphery of the three-dimensional object 32. However, when carrying out both the white line detection and the three-dimensional object detection, it becomes important how the brightness reference is set.

In addition, when the camera control values for the white line are used when detecting the three-dimensional object, the picture may saturate, thereby making it impossible to gather the information of the three-dimensional object. Furthermore, even if the camera ECU 10 an simply switch between the picture for the white line appropriately applied with the camera control values for the white line and the picture for the three-dimensional object appropriately applied with the camera control values for the three-dimensional object, the stereo ECU 20 may cause a timing error of the image processing or make an erroneous input of the image to be subjected to the image processing, unless the captured frames match between the camera ECU 10 and the stereo ECU 20.

### Embodiment

In this embodiment, the shutter control of one of the pair of stereo cameras is alternately switched for the white line detection and for the three-dimensional object detection, so that the image processing apparatus for the vehicle can accurately detect the white line and the three-dimensional object. In addition, by always displaying the image that is captured by one of the stereo cameras on a display device, it becomes possible to support the driving of the vehicle without increasing the number of vehicle cameras.

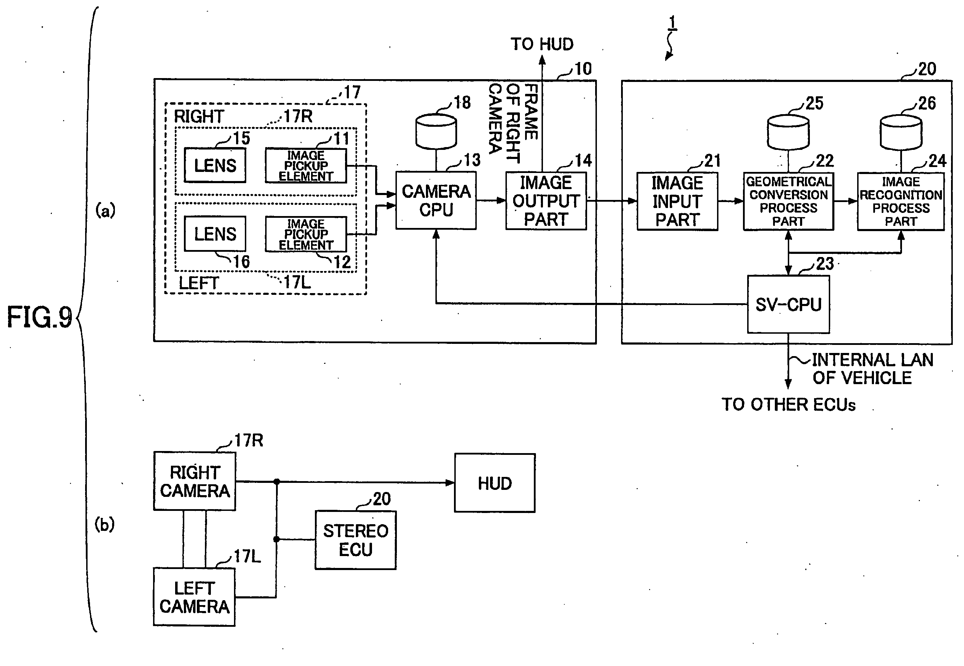

FIG. 9(a) is a diagram showing an example of a system structure of the image processing apparatus for the vehicle according to this embodiment. In FIG. 9(a), those parts that are the same as those corresponding parts in FIG. 1 are designated by the same reference numerals, and a description thereof will be omitted.

The camera module 17 is formed by a stereo camera that is made up of a right camera 17R and a left camera 17L, and one of these cameras (right camera 17R in this embodiment) is also used as a camera for night vision. Since a frame for night vision is displayable as it is on the display device without being subjected to the image processing of the stereo ECU 20, the image output part 14 outputs the frame captured by the right camera 17R to the Head Up Display (HUB), for example, and outputs the frames captured by the right and left cameras 17R and 17L to the image input part 21, while a Night Vision (NV) apparatus is operating (hereinafter simply referred to as during operation of the NV apparatus).

Next, a description will be given of the shutter control of this embodiment. As described above, the camera control values such as the shutter speed and the gain value are adjusted to optimum values with respect to the capturing target object. In addition, since a sufficient amount of light cannot be obtained at night, it is necessary to set the shutter speed slower and the gain value higher so as to obtain appropriate camera control values for the night vision.

The vehicle uses numerous images, such as the image for the three-dimensional object detection, the image for the white line detection and the image for the night vision, depending on the purpose, but it is difficult from the point of view of the cost and the vehicle space to provide the cameras for each purpose. Accordingly, this embodiment uses one of the cameras for the three-dimensional object detection for the night vision, and uses the other of the cameras for the white line detection, so as to realize the three-dimensional object detection, the white line detection and the image capturing for the night vision by a pair of stereo cameras.

FIG. 9(b) is a diagram generally showing a stereo camera sharing system. In FIG. 9(b), those parts that are the same as those corresponding parts in FIG. 9(a) are designated by the same reference numerals. The camera 17R always captures the image using the cameral control values for the night vision (hereinafter simply referred to as the camera control values for the NV), and the camera 17L captures the image by alternately switching between the camera control values for the NV and the camera control values for detecting the white line (hereinafter simply referred to as the camera control values for the white line). Accordingly, when the camera 17L captures the image using the camera control values for the NV, the stereo ECU 20 can detect the three-dimensional object using a pair of frames. And, when the camera 17L captures the image using the camera control values for the white line, the stereo ECU 20 can detect the white line.

But even if an image acquiring part 10 can simply switch between the frame for the white line detection applied with the camera control values for the white line and the frame for the three-dimensional object detection appropriately applied with the camera control values for the night vision, the stereo ECU 20 may cause a timing error of the image processing or make an erroneous input of the image to be subjected to the image processing, unless the captured frames match between the image acquiring part 10 and the stereo ECU 20.

Accordingly, the image processing apparatus 1 for the vehicle according to this embodiment operates as follows, in order to obtain images respectively suited for the processes of the three-dimensional object detection and the white line detection.

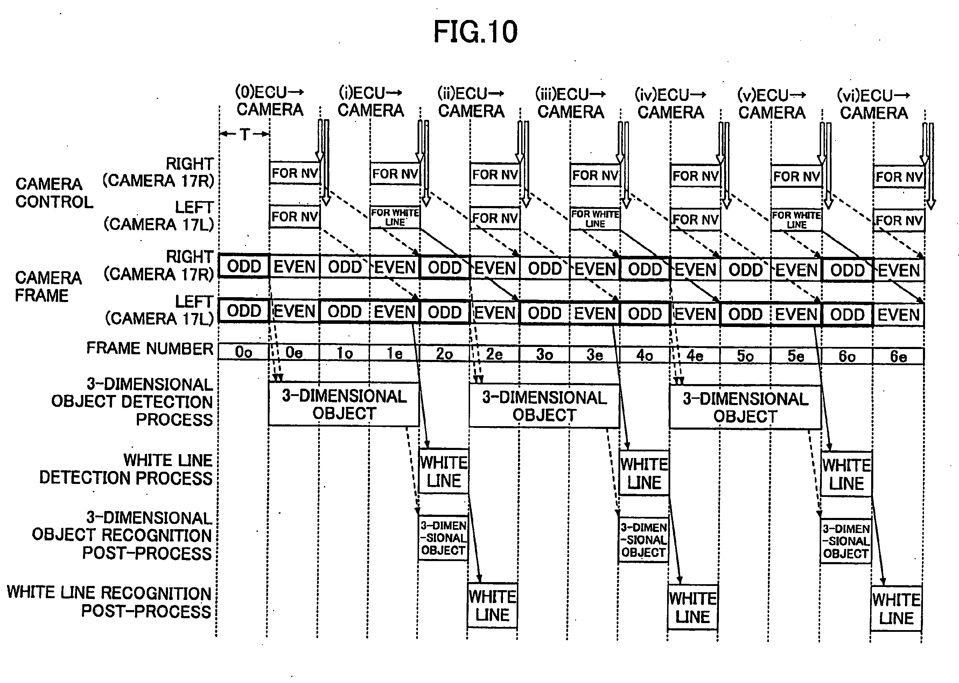

FIG. 10 is a diagram showing a portion of an image processing sequence carried out between the image acquiring part 10 and the stereo ECU 20.

The SV-CPU 23 of the stereo ECU 20 makes a serial communication with the camera CPU 13 within the image acquiring part 10. The SV-CPU 23 transmits the camera control values that are computed by the shutter control of the image recognition process part 24 to each of the cameras 17R and 17L. The SV-CPU 23 always transmits the camera control values for the NV to the camera 17R, and always alternately transmits the camera control values for the NV and the cameral control values for the white line to the camera 17L.

Accordingly, the camera control values for the white line and the camera control values for the NV are transmitted to the camera 17L at a transmission period amounting to a predetermined interval T (for example, 50 ms). The transmission sequence of the camera control values for the white line and the camera control values for the NV are set so that the camera control values for the white line are transmitted when the communication counter value ((i) through (vi) in FIG. 10) is an odd number and the camera control values for the NV are transmitted when the communication counter value is an even number.

In the cycle in which the cameras 17R and 17L are controlled by the camera control values for the NV, the image recognition process part 24 carries out the three-dimensional object detection process using a pair of frames. In addition, in the cycle in which the camera 17L is controlled by the camera control values for the white line, the image recognition process part 24 carries out the white line detection process using the frame captured by the camera 17L.

When transmitting the camera control values at a transmission timing, the SV-CPU 23 transmits the camera control values that have been last computed by the image recognition process part 24 at that transmission timing. In other words, if the process of computing the camera control values by the image recognition process part 24 is not carried out in time for the transmission timing for some reason such as a high load state, the previously computed camera control values are transmitted.

On the other hand, the image acquiring part 10 carries out the white line detection and the camera control for the NV in minimum units of a predetermined number of frames. FIG. 10 shows a case where the camera control values for the white line and the camera control values for the NV that are obtained from the SV-CPU 23 are applied for every 1 frame. The number of frames to which the camera control values for the white line are applied and the number of frames to which the camera control values for the NV are applied do not need to be the same.

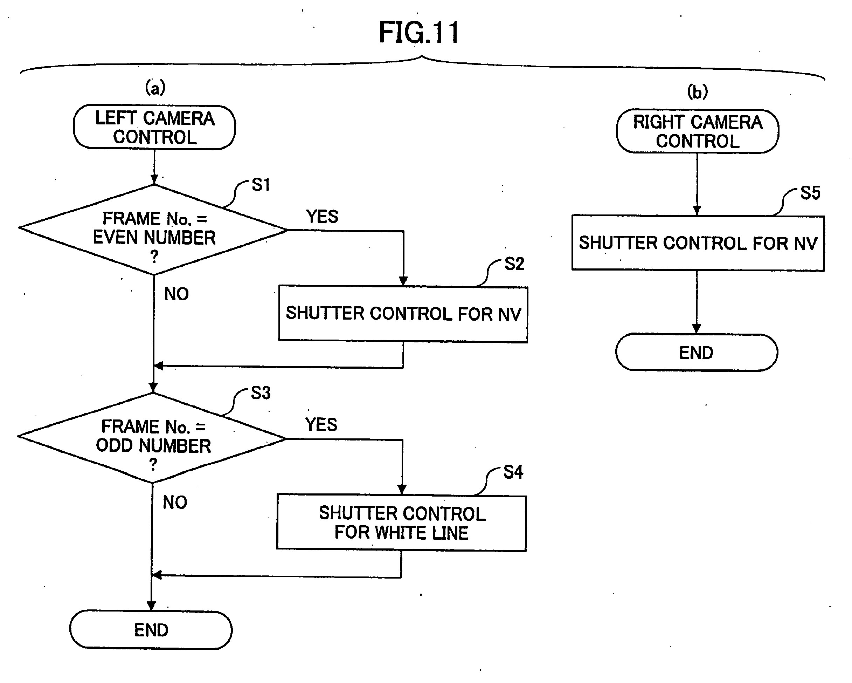

FIG. 11 is a flow chart showing a control procedure in which the right and left cameras 17R and 17L are controlled by the image processing sequence described above. FIG. 11(a) shows the camera control of the camera 17L, and FIG. 11(b) shows the camera control of the camera 17R.

The camera CPU 13 judges whether the camera control of the camera 17L is to be for the NV or for the white line, depending on the frame number (S1). If the frame number (frame No.) is an even number (YES in S1), the camera CPU 13 controls the camera 17L by the camera control values for the NV (S2).

In FIG. 10, the frame numbers "0o, 20, 4o, 6o, ..." correspond to the frames for which the camera 17L is controlled in the above described manner, and the camera 17L captures these frames using the camera control values for the NV.

Of the camera control values for the NV, the shutter speed has a lower limit and the gain value has an upper limit, thereby making it possible to prevent halation even when a light source such as a leading vehicle and a street lamp is captured. During operation of the NV apparatus, the reflected light from the three-dimensional object is captured by illumination using light having a wavelength in a near infrared region so as to avoid dazzling an opposing vehicle, and a visible light cut filter is provided on the camera 17R in order to efficiently input the near infrared light thereto. In addition, since the three-dimensional object detection cannot be made if a difference other than the parallax exists between the pair of frames, a visible light cut filter is also provided on the camera 17L. Hence, at least during operation of the NV apparatus, the illumination using the near infrared ray is made and the visible light cut filter is provided on each of the right and left cameras 17R and 17L.

If the frame number is an odd number (YES in S3), the camera CPU 13 controls the camera 17L by the camera control values for the white line (S4).

In FIG. 10, the frame numbers "lole, 3o3e, 5o5e, ..." correspond to the frames for which the camera 17L is controlled in the above described manner, and the camera 17L captures these frames using the camera control values for the white line.

Because it is preferable to detect the white line that is bright (has a large luminance), the camera control values for the white line has no lower limit for the shutter speed and has no upper limit for the gain value. Since the white line does not have a light source, no halation is generated even if these limits are not provided. In addition, since the headlight (slightly including near infrared) and near infrared light are reflected by the white line, the camera 17L can capture the white line with a sufficiently high luminance even when the visual light cut filter is provided thereon.

As described above, in the cycle in which the image acquiring part 10 does not receive the camera control values from the stereo ECU 20, the cameras 17R and 17L are controlled by applying the most recent camera control values at that point in time.

In addition, the right camera 17R which continues to project the image to the HUD for the night vision is always controlled by the camera control values for the NV. Hence, the right camera 17R is controlled by the camera control values for the NV regardless of the frame number (S5).

In FIG. 10, the frame numbers "0o~6e..." correspond to the frames for which the camera 17R is controlled in the above described manner, and the camera 17R captures the image using the camera control values for the NV in these frames.

As shown in FIG. 10, the shutter control of the camera 17L is carried out using the camera control values that are alternately switched between the camera control values for the white line and the camera control values for the NV, and the shutter control of the camera 17R is carried out using only the camera control values for the NV.

Such a process flow is repeated between the camera ECU 10 and the stereo ECU 20, thereby making it possible for the camera 17R to obtain images suited for the three-dimensional object detection process and the night vision and for the camera 17L to alternately obtain images suited for the three-dimensional object detection process and the white line detection process.

The image acquiring part 10 captures the image by applying the last received camera control values for the white line or the last received camera control values for the NV that have been received for every minimum frame unit thereof. In other words, it is not essential for the reception timing of the camera control values and the image capturing timing to be synchronized.

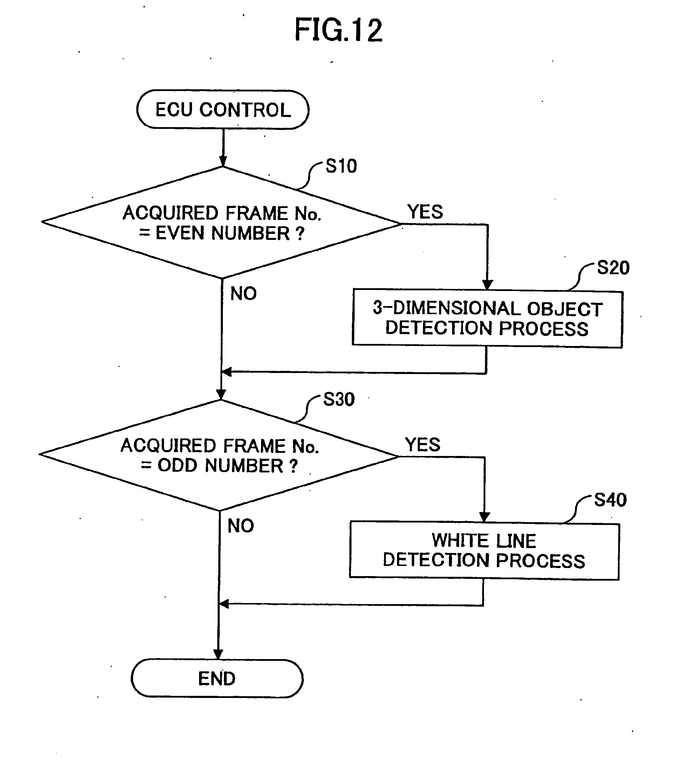

FIG. 12 is a flow chart showing an image processing procedure of the stereo ECU 20 that detects the white line or the three-dimensional object according to the frame number.

The captured frame is transmitted to the stereo ECU 20 together with the camera control values of the frame and its frame number.

The stereo ECU 20 judges whether to carry out the image processing of the three-dimensional object or the image processing of the white line depending on the frame number (S10).

The stereo ECU 20 which receives the frame from the image acquiring part 10 distinguishes the frame of the white line from the frame of the three-dimensional object depending on the frame number assigned to the frame. If the frame number of the frame that is to be processed is an even number (YES in S10), the stereo ECU 20 judges that the frame is the frame of the three-dimensional object captured by the camera control for the three-dimensional object and carries out the three-dimensional object detection process (S20).

On the other hand, if the frame number of the frame that is to be processed is an odd number (YES in S30), the stereo ECU 20 judges that the frame is the frame of the white line captured by the camera control for the white line and carries out the white line detection process (S40).

Even when the frame number of the frame that is to be processed is the odd number, the frame captured by the camera 17R is always output from the image output part 14 to the HUD. In the case where the stereo ECU 20 carries out the white line detection process, the three-dimensional object detection process based on this frame (frame having the frame number that is the odd number) is not carried out. In this case, the frame that is captured by the camera 17R and input to the stereo ECU 20 is not used or is discarded.

A white line detection post-process such as the computation of the camera control values for the white line is carried out after the white line detection process, and a three-dimensional object detection post-process such as the computation of the camera control values for the three-dimensional object is carried out after the three-dimensional object detection process.

If the processing time of the white line detection process or the three-dimensional object detection process increases due to increased processing load or the like and a timing error is generated thereby, a restart is made by readjusting the timings. For example, the limit of the processing time is set to 16.7 ms or less for the white line detection process, and is set to 83.3 ms or less for the three-dimensional object detection process.

An idle run needs to be made in order to match the timings of the frame number and the ODD or EVEN start during an initial start of the image recognition process part 24 within the stereo ECU 20.

Therefore, because the stereo ECU 20 distinguishes the frame to be subjected to the white line detection process from the frame to be subjected to the three-dimensional object detection process depending on the frame number that is assigned to the frame, it is possible to prevent the frame to be subjected to the white line detection process from being erroneously input as the frame to be subjected to the three-dimensional object detection process. In addition, the stereo ECU 20 can carry out the white line detection process and the process of computing the camera control values for the white line based on the frame that is distinguished as being the frame to be subjected to the white line detection process, and carry out the three-dimensional object detection process and the process of computing the camera control values for the three-dimensional object (for the NV) based on the frame that is distinguished as being the frame to be subjected to the three-dimensional object detection process.

A transmission sequence such as "transmitting the camera control values for the white line when the communication counter value is an odd number, and transmitting the camera control values for the NV when the communication counter value is an even number" is defined between the camera CPU 13 and the SV-CPU 23 with respect to the camera control values for the white line and the camera control values for the NV that are obtained by the computations and processes described above, and the stereo ECU 20 transmits the camera control values to the camera ECU 10 according to such a definition of the transmission .sequence. Accordingly, the camera ECU 10 can receive the camera control values in this transmission sequence and apply the received camera control values to the camera 17L.

The camera ECU 10 which executes each camera control transmits the captured frame to the stereo ECU 20 by adding thereto the camera control values of the frame and the frame number thereof. Such a processing cycle is repeated between the camera ECU 10 and the stereo ECU 20, thereby making it possible to obtain images suited for both the three-dimensional object detection process and the white line detection process.

Although the preferred embodiment of the present invention is described heretofore in detail, the present invention is not limited to this embodiment, and various modifications and replacements may be in this embodiment without departing from the scope of the present invention. For example, the scanning system employed in this embodiment is not limited to a particular system, and the interlacing system or the non-interlacing system may be employed.

## Claims

1. An image processing apparatus for vehicle driver support, wherein there are provided:
a first image pickup means (17L) configured to, for every frame, alternately carry out and switch between a shutter control based on first camera control values for a white line detection and a shutter control based on second camera control values both for a three-dimensional object detection and a night vision;
a second image pickup means (17R) configured to, for every frame, carry out a shutter control based on the second camera control values both for the three-dimensional object detection and the night vision;
illumination means configured to illuminate objects to be detected using near infrared light;
an image process part (20) configured to make the white line detection from an image that is captured by using said first camera control values for the first image pickup means (17L), or to make the three-dimensional object detection from an image that is captured by using said second camera control values for the first image pickup means (17L) and from an image that is captured by the second image pickup means (17R);
wherein the image process part (20) is configured to adjust the first camera control values after the white line detection and to adjust the second camera control values after the three-dimensional object detection; and
an image output part (14) configured to output images that are captured by the second image pickup means on a display device.

2. The image processing apparatus for vehicle driver support as claimed in claim 1, **characterized in that**:
said image output part (14) is configured to output an image that is captured by the second image pickup means (17R) by the shutter control based on the second camera control values, even if the first image pickup means (17L) captures an image by the shutter control based on the first camera control values.

3. The image processing apparatus for vehicle driver support as claimed in claim 1, **characterized in that**:
the shutter control for the three-dimensional object detection has a lower limit for a shutter speed and an upper limit for a gain value, and the shutter control for the white line detection has no lower limit for a shutter speed and no upper limit for a gain value.

## Patentansprüche

1. Bildverarbeitungsvorrichtung zur Fahrzeugfahrerunterstützung, wobei bereitgestellt werden:
eine erste Bildaufnahmeeinrichtung (17L), die ausgelegt ist, für jeden Rahmen abwechselnd eine Blendensteuerung auf der Grundlage von ersten Kamerasteuerwerten für eine Weißlinienerfassung und eine Blendensteuerung auf der Grundlage von zweiten Kamerasteuerwerten sowohl für eine Erfassung eines dreidimensionalen Objektes als auch eine Nachtsicht durchzuführen und zwischen diesen zu wechseln;
eine Bildaufnahmeeinrichtung (17R), die ausgelegt ist, für jeden Rahmen eine Blendensteuerung auf der Grundlage der zweiten Kamerasteuerwerte sowohl für die Erfassung eines dreidimensionalen Objektes als auch die Nachtsicht durchzuführen;
eine Beleuchtungseinrichtung, die ausgelegt ist, zu erfassende Objekte unter Verwendung von kurzwelligem Infrarotlicht zu beleuchten;
einen Bildverarbeitungsteil (20), der ausgelegt ist, die Weißlinienerfassung von einem Bild durchzuführen, das unter Verwendung der ersten Kamerasteuerwerte für die erste Bildaufnahmeeinrichtung (17L) aufgenommen wird, oder die Erfassung für ein dreidimensionales Objekt von einem Bild, das unter Verwendung der zweiten Kamerasteuerwerte für die erste Bildaufnahmeeinrichtung (17L) aufgenommen wird, und von einem Bild, das von der zweiten Bildaufnahmeeinrichtung (17R) aufgenommen wird, durchzuführen;
wobei der Bildverarbeitungsteil (20) ausgelegt ist, die ersten Kamerasteuerwerte nach der Weißlinienerfassung einzustellen und die zweiten Kamerasteuerwerte nach der Erfassung eines dreidimensionalen Objektes einzustellen; und
einen Bildausgabeteil (14), der ausgelegt ist, Bilder, die von der zweiten Bildaufnahmeeinrichtung aufgenommen werden, auf einer Anzeigevorrichtung auszugeben.

2. Bildverarbeitungsvorrichtung zur Fahrzeugfahrerunterstützung nach Anspruch 1, **dadurch gekennzeichnet, dass**
der Bildausgabeteil (14) ausgelegt ist, ein Bild, das von der zweiten Bildaufnahmeeinrichtung (17R) über die Blendensteuerung auf der Grundlage der zweiten Kamerasteuerwerte aufgenommen wird, sogar dann auszugeben, wenn die erste Bildaufnahmeeinrichtung (17L) ein Bild über die Blendensteuerung auf der Grundlage der ersten Kamerasteuerwerte aufnimmt.

3. Bildverarbeitungsvorrichtung zur Fahrzeugfahrerunterstützung nach Anspruch 1, **dadurch gekennzeichnet, dass**
die Blendensteuerung für die Erfassung eines dreidimensionalen Objektes eine untere Grenze für eine Belichtungszeit und eine obere Grenze für einen Verstärkungswert aufweist und die Blendensteuerung für die Weißlinienerfassung keine untere Grenze für eine Belichtungszeit und keine obere Grenze für einen Verstärkungswert aufweist.

## Revendications

1. Appareil de traitement d'images pour l'aide à la conduite automobile, dans lequel sont prévus :
un premier moyen de capture d'images (17L) configuré, pour chaque trame, pour réaliser alternativement et basculer entre une commande d'obturateur basée sur des valeurs de commande de premier appareil photo pour une détection de ligne de blanc et une commande d'obturateur basée sur des valeurs de commande de deuxième appareil photo pour une détection d'objets tridimensionnels et une vision nocturne ;
un deuxième moyen de capture d'images (17R) configuré, pour chaque trame, pour réaliser une commande d'obturateur basée sur des valeurs de commande de deuxième appareil photo pour la détection d'objets tridimensionnels et la vision nocturne ;
un moyen d'éclairage configuré pour éclairer des objets à détecter en utilisant une lumière du proche infrarouge ;
une partie de traitement d'images (20) configurée pour effectuer la détection de ligne de blanc à partir d'une image qui est capturée en utilisant lesdites valeurs de commande de premier appareil photo pour le premier moyen de capture d'images (17L), ou bien pour réaliser la détection d'objets tridimensionnels à partir d'une image qui est capturée en utilisant lesdites valeurs de commande de deuxième appareil photo pour le premier moyen de capture d'images (17L) et à partir d'une image qui est capturée par le deuxième moyen de capture d'images (17R) ;
dans lequel la partie de traitement d'images (20) est configurée pour ajuster les valeurs de commande de premier appareil photo après la détection de ligne de blanc et pour ajuster les valeurs de commande de deuxième appareil photo après la détection d'objets tridimensionnels ; et
une partie de sortie d'images (14) configurée pour délivrer en sortie des images qui sont capturées par le deuxième moyen de capture d'images sur un dispositif d'affichage.

2. Appareil de traitement d'images pour l'aide à la conduite automobile selon la revendication 1, **caractérisé en ce que** :
ladite partie de sortie d'images (14) est configurée pour délivrer en sortie une image qui est capturée par le deuxième moyen de capture d'images (17R) par la commande d'obturateur basée sur des valeurs de commande de deuxième appareil photo, même si le premier moyen de capture d'images (17L) capture une image par la commande d'obturateur basée sur des valeurs de commande de premier appareil photo.

3. Appareil de traitement d'images pour l'aide à la conduite automobile selon la revendication 1, **caractérisé en ce que** :
la commande d'obturateur pour la détection d'objets tridimensionnels présente une limite minimale pour une vitesse d'obturation et une limite maximale pour une valeur de gain, et la commande d'obturateur pour la détection de ligne de blanc n'a aucune limite minimale pour une vitesse d'obturation et aucune limite maximale pour une valeur de gain.
